# EUROPÄISCHE PATENTSCHRIFT

(11) **EP 0 796 585 B1**
(45) Veröffentlichungstag und Bekanntmachung des Hinweises auf die Patenterteilung: **22.05.2002**
(21) Anmeldenummer: 97103694.2
(22) Anmeldetag: 06.03.1997
(51) Int. Cl.: A47J 37/10, A47J 36/06

(54) **Tellerförmiger Deckel für Kochgeschirr, Gargefässe o. dgl.**
Dish-like lid for cooking and frying vessels or the like
Couvercle en forme d'assiette pour des récipients de cuisson ou de friture ou similaires

(30) Priorität: 22.03.1996 DE 29605334 U
(43) Veröffentlichungstag der Anmeldung: 24.09.1997
(73) Patentinhaber: Repac, Petra, 65611 Brechen (DE); Culig, Branko, 8330 Metlika (SI)
(72) Erfinder: Repac, Cedomir, 65611 Brechen (DE); Culig, Branko, 68332 Gradac (SI)
(74) Vertreter: Müller, Eckhard, Dr.

(56) Entgegenhaltungen:
- EP-A- 0 111 292
- EP-A- 0 275 547
- CH-A- 266 595
- DE-A- 3 044 085
- DE-A- 4 412 843
- DE-C- 825 158
- FR-A- 922 595
- US-A- 2 751 901
- US-A- 3 827 596

## Beschreibung

Die Erfindung betrifft einen tellerförmigen Deckel für Kochgeschirr, Gargefäße o. dgl., wie Kochtopf oder Bratpfanne, der in einem zentralen Mittelbereich wenigstens eine Durchbrechung aufweist, wobei auf der Oberseite des Deckels eine Halterung angeordnet ist, die ein die wenigstens eine Durchbrechung dachartig übergreifendes Abdeckelement trägt, wobei das Abdeckelement mittels einer Verstelleinrichtung an der Halterung festgelegt und mit der Verstelleinrichtung ein Anheben bzw. Absenken des Abdeckelements vom bzw. zum Deckel zum Freigeben oder Abdecken der wenigstens einen Durchbrechung durchführbar ist.

Ein tellerförmiger Deckel mit den eingangs genannten Merkmalen ist beispielsweise aus der US-A-3 827 596 bekannt. Dieser tellerförmige Deckel besitzt eine Durchbrechung und ein die Duchbrechung dachartig übergreifendes Abdeckelement, welches höhenverstellbar an einer Halterung festgelegt ist. Die Halterung ist als im wesentlichen zentrisch auf der Oberseite des Deckels befestigter Fuß ausgebildet. Eine Handhabe einer Verstelleinrichtung ist an dem Fuß verstellbar gelagert, mit einem Innengewinde, welches mit einem Außengewinde der Halterung in Eingriff steht, so daß durch eine Drehung der Handhabe je nach Drehrichtung das Abdeckelement anhebbar beziehungsweise absenkbar ist.

Ein weiterer Deckel ist bspw. aus der EP 0 275 547 A1 bereits bekannt. Dieser bekannte Deckel ist in einer Mittelzone mit mehreren Löchern versehen, wobei oberhalb der Löcher ein an einer Halterung angeordnetes Abschirmstück angeordnet ist, das von den Löchern nach oben beabstandet ist. Somit wird dafür gesorgt, daß ein freies Entweichen von Gas ermöglicht ist, ein Austreten von Flüssigkeiten, wie Fettspritzern o. dgl., aus dem Deckel jedoch weitestgehend vermieden wird. Allerdings ist dieser bekannte Deckel hinsichtlich der Herstellung recht aufwendig und erst nach einer komplizierten Demontage des Abschirmelementes sowie der Halterung leicht zu reinigen. Im übrigen ist es mit diesem bekannten Deckel nach dem Stand der Technik auch nicht möglich, durch ein Schließen oder öffnen der Durchbrechungen Einfluß auf den Garvorgang des Kochgutes zu nehmen.

Demgegenüber liegt der Erfindung die Aufgabe zugrunde, einen Deckel mit den eingangs genannten Merkmalen dahingehend weiterzubilden, daß ein konstruktiv einfacher Aufbau und eine einfache Handhabe gewährleistet ist.

Diese Aufgabe wird nach der Erfindung bei dem Deckel mit den eingangs genannten Merkmalen dadurch gelöst, daß die Halterung als zumindest den zentralen Mittelbereich des Deckels überspannender Bügel ausgebildet ist. Diese Ausgestaltung hat den Vorteil, daß die Durchbrechung zentrisch bzw. in dem zentralen Mittelbereich des Deckels angeordnet werden kann, wobei die beiden Bügelenden der Halterung dann seitlich dieses Mittelbereichs mit dem Deckel verbunden sind. Hierdurch wird in konstruktiver Sicht der Aufbau des Deckels vereinfacht und die Handhabung beim Abnehmen des Deckels vom Koch- oder Gargefäß verbessert. Weiterhin ist es möglich, die Durchbrechung des Deckels je nach den individuellen Bedürfnissen bzgl. des Garoder Kochvorganges vollständig zu schließen bzw. mehr oder weniger zu öffnen. So besteht bspw. die Möglichkeit, zu Beginn eines Gar- oder Kochvorganges die Durchbrechungen zu öffnen, um die in der Anfangsphase vermehrt aus dem Gargut austretende Flüssigkeit in Form von Dampf austreten zu lassen, während bspw. am Ende des Garvorganges die Durchbrechungen mittels des Abdeckelements vollständig oder jedenfalls zum Teil geschlossen werden kann. Natürlich sind auch individuell unterschiedliche Öffnungsdauern bzw. Schließdauern der Durchbrechung möglich, was im Ermessen des jeweiligen Benutzers liegt. Es versteht sich, daß statt der wenigstens einen Durchbrechung auch mehrere Durchbrechungen in dem Deckel vorhanden sein können, die dann von dem Abdeckelement dachartig übergriffen und durch Absenken des Abdeckelements gemeinsam geschlossen werden können.

Dabei hat es sich als vorteilhaft erwiesen, daß der Bügel in etwa mittig eine Bohrung, Durchbrechung o. dgl. aufweist, in der eine Handhabe, Betätigung o. dgl. der Verstelleinrichtung gelagert ist.

Von Vorteil ist der Deckel von einem Glasboden und einem den Glasboden umfangsseitig umfassenden Außenring bestehend aus Blech o. dgl. gebildet, wobei der Bügel endseitig mit dem Außenring, bspw. durch Nieten, Schrauben, Verschweißen, Verkleben o. dgl. verbunden ist. Diese Maßnahme hat den Vorteil, daß an dem Glasboden keine besonderen Mittel zur Befestigung des Bügels vorgesehen sind, woraus fertigungstechnische Vorteile resultieren. Im übrigen kann der Glasboden bzgl. der äußeren Abmessungen kleiner ausgebildet werden, da der Außenring für eine Vergrößerung der von dem Deckel abzudeckenden Fläche sorgt. Insoweit kann der Glasboden bzgl. der Abmessungen reduziert werden, was ebenfalls Einsparungen bei den Fertigungskosten bringt und zu einer Gewichtsreduzierung des Deckels führt.

Von Vorteil ist der Bügel im Bereich eines Mittelabschnitts des Außenrings an diesem befestigt. Dadurch, daß der Bügel sich nicht über den gesamten Durchmesser des Deckels bis hin zum Außenrand erstreckt, sondern im Bereich eines Mittelabschnitts des Außenrings an diesem befestigt ist, kann auch der Bügel hinsichtlich der Dimensionierung kleiner ausgebildet werden, was zu einer Kostenersparnis und Gewichtsreduktion führt.

Nach einer weiteren vorteilhaften Ausgestaltung der Erfindung weisen die Bohrung o. dgl. ein Innengewinde und die Handhabe ein Außengewinde auf, die miteinander in Eingriff stehen, wobei eine Drehung der Handhabe o. dgl. in eine Anhebung oder Absenkung des Abdeckelements überführt wird. Das Abdeckelement ist bodenseitig bspw. mittels Verschraubung o. dgl. lösbar mit der Handhabe verbunden.

Nach einer besonders vorteilhaften, eigenständigen Ausführungsform der Erfindung weist die Verstelleinrichtung ein Federelement auf, welches das Abdeckelement in öffnungsstellung i. w. zur wenigstens teilweisen Kompensation des Gewichts von Abdeckelement und/oder Verstelleinrichtung beaufschlagt, wobei das Abdeckelement bzw. die Verstelleinrichtung an der Halterung axial verschiebbar gelagert sind. Nach dieser Ausführungsform kann die Durchbrechung im Deckel durch einfaches Absenken bzw. Anheben der Handhabe bzw. der Verstelleinrichtung geschlossen oder geöffnet werden. Die Federkraft dient dazu, daß das Abdeckelement zusammen mit der Verstelleinrichtung bzw. Handhabe praktisch schwerefrei in jeder axialen Position gehalten werden kann. Im übrigen weist die Anordnung den besonderen Vorteil auf, daß das Abdeckelement aus der Schließstellung bereits durch einen geringen, im Gargefäß herrschenden Überdruck in eine Öffnungsstellung überführt werden kann, da die auf das Abdeckelement und die Handhabe wirkende Gewichtskraft durch die Federkraft weitestgehend kompensiert wird.

Von Vorteil ist das Federelement in einem Ringraum der Halterung und/oder der Verstelleinrichtung aufgenommen und somit von außen nicht sichtbar bzw. zugänglich.

Von Vorteil ist die Federkonstante des Federelements derart bemessen bzw. ausgelegt, daß das Abdeckelement bei in dem Gargefäß herrschenden geringem Überdruck im Bereich von 0.05 - 0,2 bar, insbesondere etwa 0,1 bar, von der Abdeckposition selbsttätig in die öffnungsposition überführt wird. Wird das Abdeckelement zunächst beim Beginn des Garvorganges durch den Benutzer in die Schließstellung überführt, genügt bereits ein geringer, im Gargefäß herrschender Überdruck, um das Abdeckelement selbsttätig in die Öffnungsposition zu überführen, so daß Wasserdampf o. dgl. ohne weiteres aus der Öffnung des Deckels nach außen austreten kann.

Weiterhin besteht auch die Möglichkeit, daß die Federkonstante des Federelements derart bemessen ist, daß das Abdeckelement manuell an der Abdeckposition in die Freigabeposition und umgekehrt überführt wird.

Die Oberseite des Deckels weist nach einer anderen Ausgestaltung der Erfindung eine i. w. konkave Wölbung auf. Hierdurch ist die Möglichkeit gegeben, daß aus der Durchbrechung austretende Fett-, Ölspritzer oder Wrasen entlang der konkav gewölbten Oberfläche durch die Durchbrechung zurück in das Gargefäß eintreten können.

Die Oberseite des Abdeckelements weist hingegen eine i. w. konvexe Wölbung auf, wodurch der aus der Durchbrechung austretende Wasserdampf o. dgl. in Richtung der Oberfläche des Deckels radial nach außen umgelenkt wird, so daß aufgrund der flächigen Verteilung und der Durchmischung des Wasserdampfs mit der Umgebungsluft eine Verbrennungsgefahr praktisch ausgeschlossen ist. Weiterhin sorgt diese konvexe Formgebung bei abgesenktem Abdeckelement für eine wirksame dichtende Anlage des Randes des Abdeckelements an der Oberfläche des Deckels.

Weitere Vorteile und Anwendungsmöglichkeiten der vorliegenden Erfindung ergeben sich aus der nachfolgenden Beschreibung der Ausführungsbeispiele anhand der Zeichnungen.

Es zeigen:
- Figur 1: eine Seitenansicht eines Ausführungsbeispiels des erfindungsgemäßen Deckels, teilweise geschnitten,
- Figur 2: eine Detailansicht des Deckels gemäß Figur 1 im Bereich der Verbindungsstelle des Bügels mit dem Außenring und
- Figur 3: eine Detailansicht der Verstelleinrichtung des Deckels gemäß Figur 1.

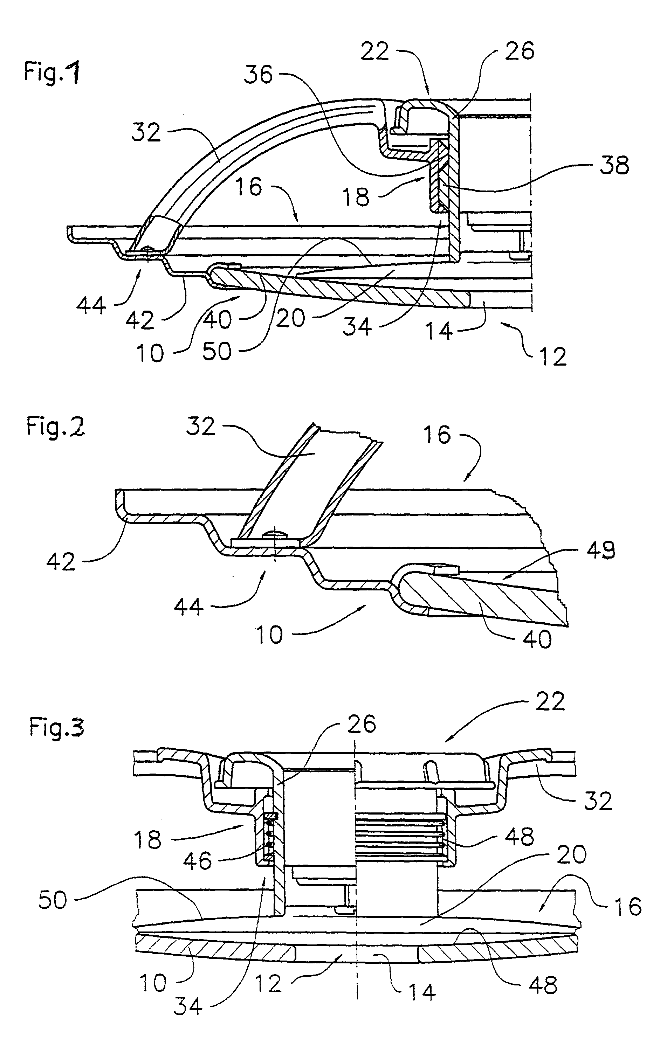

Die in den Figuren dargestellten Ausführungsbeispiele des erfindungsgemäßen tellerförmigen Deckels 10 für Kochgeschirr, Gargefäße o. dgl. zeigen in verschiedenen Ansichten und Schnittdarstellungen einen Deckel 10, der in einem zentralen Mittelbereich 12 eine oder mehrere Durchbrechungen 14 aufweist. Die Durchbrechung 14 kann gemäß dem Ausführungsbeispiel der Figuren 1 bis 3 zentrisch angeordnet sein. Desweiteren besteht jedoch auch die Möglichkeit, die mehreren Durchbrechungen 14, bspw. auf einem Kreisring o. dgl. im Mittelbereich 12 anzuordnen.

Auf der Oberseite 16 des Deckels 10 ist eine Halterung 18 angeordnet, die ein die wenigstens eine Durchbrechung 14 dachartig übergreifendes Abdeckelement 20 trägt.

Das Abdeckelement 20 ist mittels einer Verstelleinrichtung 22 an der Halterung 18 festgelegt, wobei mittels der Verstelleinrichtung 22 ein Abheben bzw. Absenken des Abdeckelement 20 vom bzw. zum Deckel 10 zum Freigeben oder Abdecken der wenigstens einen Durchbrechung 14 durchführbar ist.

Nach dem Ausführungsbeispiel der Figuren 1 bis 3 ist die Halterung 18 als zumindest den zentralen Mittelbereich 12 des Deckels 10 überspannender Bügel 32 ausgebildet. Im Ausführungsbeispiel besitzt der Bügel zwei Arme, wobei es hier auch im Rahmen der Erfindung liegt, daß der Bügel drei oder mehr Arme aufweist, welche bevorzugt i. w. gleich verteilt über den Umfang angeordnet sind.

Zum insbesondere stufenlosen Absenken bzw. Anheben des Abdeckelements 20 besitzt der Bügel 32 etwa mittig eine Bohrung 34, Durchbrechung o. dgl., in der eine Handhabe 26, eine Betätigung o. dgl. der Verstelleinrichtung 22 gelagert ist. Hierzu weist die Bohrung 34 o. dgl. ein Innengewinde 36 und die Handhabe 26 ein Außengewinde 38 auf, die miteinander in Eingriff stehen, wobei eine Drehung der Handhabe 26 in ein Anheben oder Absenken des Abdeckelements 20 überführt wird.

Von Vorteil ist der Deckel 10 von einem Glasboden 40 und einem den Glasboden 40 umfangsseitig umfassenden Außenring 42 bestehend aus Blech o. dgl. gebildet, wobei der Bügel 32 endseitig mit dem Außenring 42, bspw. durch Nieten, Schrauben, Verschweißen, Verkleben o. dgl. verbunden ist. Insbesondere ist der Bügel 32 im Bereich eines Mittelabschnitts 44 des Außenringes 42 an diesem befestigt.

Die Verstelleinrichtung 22 weist desweiteren ein Federelement 46 auf, welches das Abdeckelement 20 in Öffnungsstellung, i. w. zur wenigstens teilweisen Kompensation des Gewichts von Abdeckelement 20 und/oder Verstelleinrichtung 22 beaufschlagt, wobei das Abdeckelement 20 an der Halterung 18 axial verschiebbar gelagert ist. Durch diese zumindest teilweise Kompensation des Gewichts des Abdeckelements 20 bzw. der Verstelleinrichtung 22 kann das Abdeckelement 20 mittels der Verstelleinrichtung 22 sozusagen schwerefrei axial aufwärts bzw. abwärts zum Öffnen bzw. Verschließen der Durchbrechung 14 verschoben werden. Das Federelement 46 selbst ist bevorzugt in einem Ringraum 48 der Halterung 18 bzw. der Verstelleinrichtung 22 aufgenommen. Die Federkonstante des Federelements 46 ist dabei derart bemessen, daß das Abdeckelement 20 bei in dem Gargefäß herrschenden Überdruck von etwa 0,05 bis 0,2 bar, insbesondere bei etwa 0,1 bar, selbsttätig von der Abdeckposition in die Öffnungsposition überführt wird. Somit ist die Möglichkeit gegeben, daß das Abdeckelement 20 selbsttätig durch einen geringen, im dem Gargefäß herrschenden Überdruck in die Öffnungsposition überführt wird.

Desweiteren besteht auch die Möglichkeit, daß die Federkonstante des Federelements 46 derart bemessen ist, daß das Abdeckelement 20 manuell von der Abdeckposition in die Öffnungsposition und umgekehrt überführt wird, wobei die manuell eingestellte jeweilige Position des Abdeckelements 20 so lange unverändert bleibt, bis die Verstelleinrichtung 22 erneut manuell betätigt wird.

Die Oberseite 16 des Deckels weist eine i. w. konkave Wölbung 49 auf. Die Oberseite des Abdeckelements 20 besitzt eine i. w. konvexe Wölbung 50.

### Bezugszeichenliste

- 10 -: Deckel
- 12 -: Mittelbereich
- 14 -: Durchbrechung
- 16 -: Oberseite
- 18 -: Halterung
- 20 -: Abdeckelement
- 22 -: Verstelleinrichtung

- 26 -: Handhabe

- 32 -: Bügel
- 34 -: Bohrung
- 36 -: Innengewinde
- 38 -: Außengewinde
- 40 -: Glasboden
- 42 -: Außenring
- 44 -: Mittelabschnitt
- 46 -: Federelement
- 48 -: Ringraum
- 49 -: konkave Wölbung
- 50 -: konkave Wölbung

## Patentansprüche

1. Tellerförmiger Deckel (10) für Kochgeschirr, Gargefäße o. dgl., wie Kochtopf oder Bratpfanne, der in einem zentralen Mittelbereich (12) wenigstens eine Durchbrechung (14) aufweist, wobei auf der Oberseite (16) des Deckels (10) eine Halterung (18) angeordnet ist, die ein die wenigstens eine Durchbrechung (14) dachartig übergreifendes Abdeckelement (20) trägt, wobei, das Abdeckelement (20) mittels einer Verstelleinrichtung (22) an der Halterung (18) festgelegt und mit der Verstelleinrichtung (22) ein Anheben bzw. Absenken des Abdeckelements (20) vom bzw. zum Deckel (10) zum Freigeben oder Abdecken der wenigstens einen Durchbrechung (14) durchführbar ist, **dadurch gekennzeichnet, daß** die Halterung (18) als zumindest den zentralen Mittelbereich (12) des Deckels (10) überspannender Bügel (32) ausgebildet ist.

2. Deckel nach Anspruch 1, **dadurch gekennzeichnet, daß** der Bügel (32) in etwa mittig eine Bohrung (34), Durchbrechung o. dgl. aufweist, in der eine Handhabe (26), Betätigung o. dgl. der Verstelleinrichtung (22) gelagert ist.

3. Deckel nach Anspruch 2, **dadurch gekennzeichnet, daß** die Bohrung (34) o. dgl. ein Innengewinde (36) und die Handhabe (26) ein Außengewinde (38) aufweisen, die miteinander in Eingriff stehen, wobei eine Drehung der Handhabe (26) o. dgl. in eine Anhebung oder Absenkung des Abdeckelements (20) überführt wird.

4. Deckel nach einem der vorhergehenden Ansprüche , **dadurch gekennzeichnet, daß** der Deckel (10) von einem Glasboden (40) und einem den Glasboden (40) umfangsseitig umfassenden Außenring (42) bestehend aus Blech o. dgl. gebildet ist, wobei der Bügel (32) endseitig mit dem Außenring (42), bspw. durch Nieten, Schrauben, Verschweißen, Verkleben o. dgl. verbunden ist.

5. Deckel nach Anspruch 4, **dadurch gekennzeichnet, daß** der Bügel (32) im Bereich eines Mittelabschnitts (44) des Außenrings (42) an diesem befestigt ist.

6. Deckel nach einem der vorhergehenden Ansprüche 1 oder 2, **dadurch gekennzeichnet, daß** die Verstelleinrichtung (22) ein Federelement aufweist, welches das Abdeckelement (20) in Öffnungsstellung, i. w. zur wenigstens teilweisen Kompensation des Gewichts von Abdeckelement (20) und/oder Verstelleinrichtung (22) beaufschlagt, wobei das Abdeckelement (20) an der Halterung (18) axial verschiebbar gelagert ist.

7. Deckel nach Anspruch 6, **dadurch gekennzeichnet, daß** das Federelement (46) in einem Ringraum (48) der Halterung (18) und/oder der Verstelleinrichtung (22) aufgenommen ist.

8. Deckel nach einem der Ansprüche 6 oder 7, **dadurch gekennzeichnet, daß** die Federkonstante des Federelements (46) derart bemessen, daß das Abdeckelement (20) bei in dem Gargefäß herrschendem Überdruck von 0.05 - 0,2 bar, insbesondere etwa 0,1 bar, selbsttätig von der Abdeckposition in die Öffnungsposition überführt wird.

9. Deckel nach einem der Ansprüche 6 oder 7, **dadurch gekennzeichnet, daß** die Federkonstante des Federelements (46) derart bemessen ist, daß das Abdeckelement (20) manuell von der Abdeckposition in die Öffnungsposition und umgekehrt überführt wird.

10. Deckel nach einem der vorhergehenden Ansprüche, **dadurch gekennzeichnet, daß** die Oberseite (16) des Deckels (10) eine i. w. konkave Wölbung (49) aufweist.

11. Deckel nach einem der vorhergehenden Ansprüche, **dadurch gekennzeichnet, daß** die Oberseite des Abdeckelements (20) eine i. w. konvexe Wölbung (15) aufweist.

## Claims

1. Plate-shaped cover (10) for cookware, cooking vessels or the like, such as cooking pots or roasting pans, which have at least one passage opening (14) in a middle region (12), wherein a mount (18), which carries a cover element (20) engaging in roof-like manner over the at least one passage opening (14), is arranged on the upper side (16) of the cover (10), and wherein the cover element (20) is fixed to the mount (18) by means of an adjusting device (22) and a raising and lowering of the cover element (20) from and to the cover (10) for freeing and covering the at least one passage opening (14) can be carried out by the adjusting device (22), **characterised in that** the mount (18) is constructed as a yoke (32) extending over at least the central middle region (12) of the cover (10).

2. Cover according to claim 1, **characterised in that** the yoke (32) has approximately centrally a bore (34), passage opening or the like in which a grip (26), an actuator or the like of the adjusting device (22) is mounted.

3. Cover according to claim 2, **characterised in that** the bore (34) or the like has an internal thread (36) and the grip (26) has an external thread (38), which are in interengagement, wherein a rotation of the grip (26) or the like is translated into a raising or lowering of the cover element (20).

4. Cover according to one of the preceding claims, **characterised in that** the cover (10) is formed from a glass base (40) and an outer ring (42) which surrounds the glass base (40) at its circumference and consists of sheet metal or the like, wherein the yoke (32) is connected at the ends with the outer ring (42) by, for example, rivets, screws, welding, gluing or the like.

5. Cover according to claim 4, **characterised in that** the yoke (32) is fastened in the region of a middle portion (44) of the outer ring (42) to this.

6. Cover according to one of the preceding claims 1 and 2, **characterised in that** the adjusting device (22) comprises a spring element biassing the cover element (20) into an open setting substantially for at least partial compensation for the weight of the cover element (20) and/or adjusting device (22), wherein the cover element (20) is held at the mount (18) to be axially displaceable.

7. Cover according to claim 6, **characterised in that** the spring element (46) is received in an annular space (48) of the mount (18) and/or the adjusting device (22).

8. Cover according to one of claims 6 and 7, **characterised in that** the spring constant of the spring element (46) is dimensioned in such a manner that the cover element (20) is automatically transferred from the covering position to the open position in the case of an excess pressure of 0.05 to 0.2 bar, particularly approximately 0.1 bar, prevailing in the cooking vessel.

9. Cover according to one of claims 6 and 7, **characterised in that** the spring constant of the spring element (46) is dimensioned in such a manner that the cover element (20) is manually transferred from the covering position to the open position and conversely.

10. Cover according to one of the preceding claims, **characterised in that** the upper side (16) of the cover (10) has a substantially concave camber (49).

11. Cover according to one of the preceding claims, **characterised in that** the upper side of the cover element (20) has a substantially convex camber (15).

## Revendications

1. Couvercle (10) en forme de cuvette pour des ustensiles de cuisson, récipients de rôtissage ou similaires, tels que des casseroles ou poêles à frire, comprenant, dans sa partie centrale (12), au moins une ouverture (14), et un support (18) aménagé à la face supérieure (16) du couvercle (10), ce support portant un élément chapeau (20) recouvrant ladite au moins une ouverture (14) à la manière d'un toit, l'élément chapeau (20) étant monté dans le support (18) au moyen d'un dispositif de réglage (22), et le dispositif de réglage (22) permettant d'effectuer une levée ou un abaissement de l'élément chapeau (20) par rapport au couvercle (10), de manière à dégager ou à reboucher ladite au moins une ouverture (14), **caractérisé en ce que** le support (18) est réalisé sous forme d'une anse (32) couvrant au moins la partie centrale (12) du couvercle (10).

2. Couvercle selon la revendication 1, **caractérisé en ce que** l'anse (32) comporte à peu près en son milieu un perçage (34), une ouverture ou similaire, dans lequel/laquelle est montée une poignée (26), un élément d'actionnement ou similaire, du dispositif de réglage (22).

3. Couvercle selon la revendication 2, **caractérisé en ce que** le perçage (34) ou similaire comporte un filetage intérieur (36), et **en ce que** la poignée (26) comporte une filetage extérieur (38), qui sont en engagement l'un avec l'autre, une rotation de la poignée (26) ou similaire étant ainsi traduite en un mouvement de montée ou de descente de l'élément chapeau (20).

4. Couvercle selon l'une des revendications précédentes, **caractérisé en ce que** le couvercle (10) est composé d'un fond en verre (40) et d'une bague extérieure (42) encerclant le fond en verre (40) par sa périphérie et façonnée en tôle ou similaire, l'extrémité de l'anse (32) étant reliée à la bague extérieure (42) par rivetage, vissage, soudage, collage ou similaire.

5. Couvercle selon la revendication 4, **caractérisé en ce que** l'anse (32) est fixée sur la bague extérieure (42) au niveau d'une partie médiane (44) de celle-ci.

6. Couvercle selon l'une des revendications précédentes 1 ou 2, **caractérisé en ce que** le dispositif de réglage (22) comporte un élément de ressort qui agit sur l'élément chapeau (20) dans la position d'ouverture, essentiellement de manière à compenser au moins partiellement le poids de l'élément chapeau (20) et/ou du dispositif de réglage (22), l'élément chapeau (20) étant monté de façon axialement mobile dans le support (18).

7. Couvercle selon la revendication 6, **caractérisé en ce que** l'élément de ressort (46) est reçu dans un espace annulaire (48) du support (18) et/ou du dispositif de réglage (22).

8. Couvercle selon l'une des revendications 6 ou 7, **caractérisé en ce que** la raideur de ressort de l'élément de ressort (46) est calculée de manière telle que l'élément chapeau (20) soit automatiquement amené de la position de bouchage à la position d'ouverture lorsque la surpression régnant à l'intérieur du récipient de cuisson est de l'ordre de 0,05 à 0,2 bar, notamment de l'ordre de 0,1 bar.

9. Couvercle selon l'une des revendications 6 ou 7, **caractérisé en ce que** la raideur de ressort de l'élément de ressort (46) est calculée de manière telle que l'élément chapeau (20) puisse être manuellement amené de la position de bouchage à la position d'ouverture, et vice versa.

10. Couvercle selon l'une des revendications précédentes, **caractérisé en ce que** la face supérieure (16) du couvercle (10) présente une courbure (49) essentiellement concave.

11. Couvercle selon l'une des revendications précédentes, **caractérisé en ce que** la face supérieure de l'élément chapeau (20) présente une courbure (15) essentiellement convexe.
